# EUROPÄISCHE PATENTSCHRIFT

(11) **EP 0 493 361 B1**
(45) Veröffentlichungstag und Bekanntmachung des Hinweises auf die Patenterteilung: **15.03.1995**
(21) Anmeldenummer: 91890309.7
(22) Anmeldetag: 23.12.1991
(51) Int. Cl.: H04R 1/38, H04R 9/08, H04M 1/03, H04M 1/19

(54) **Als Richtmikrophon ausgebildeter Telephonhandapparat**
Telephone-handset fitted with a directional microphone
Combiné téléphonique muni d'un microphone directionnel

(30) Priorität: 27.12.1990 AT 2640/90
(43) Veröffentlichungstag der Anmeldung: 01.07.1992
(73) Patentinhaber: AKG Akustische u. Kino-Geräte Gesellschaft m.b.H., A-1150 Wien (AT)
(72) Erfinder: Klein, Erich, A-2325 Himberg (AT); Ruberl, Ernst, A-2353 Guntramsdorf (AT)
(74) Vertreter: Krick, Hermann, Dipl.-Ing.

(56) Entgegenhaltungen:
- EP-A- 0 330 364
- DE-A- 3 708 747
- PATENT ABSTRACTS OF JAPAN vol. 11, no. 59 (E-482)24. Februar 1987

## Beschreibung

Die Erfindung betrifft einen als Richtmikrophon mit cardioid- oder hypercardioidförmiger Richtcharakteristik ausgebildeten Telephonhandapparat, bei dem das Richtmikrophon aus einem elektrodynamischen Tauchspulenwandler und einem mit diesem verbundenen akustischen Phasendrehglied besteht, wobei der Tauchspulenwandler in einem zweischalig ausgebildeten Handapparat untergebracht ist.

Bei den bisher allgemein in Gebrauch stehenden Handapparaten wird als Sprechkapsel ein Druckempfänger eingesetzt, dessen Richtcharakteristik kugelförmig ist. Ein Ausblenden irgendgearteter Störgeräusche, die in der mittelbaren oder unmittelbaren Umgebung einer telephonierenden Person auftreten können, ist mit einer solchen Sprechkapsel nicht möglich. Wenn auch in jüngster Vergangenheit sogenannte Linearmikrophonkapseln mit nachgeschalteten transistorisierten Verstärkern als Sprechkapseln verwendet wurden, so brachten diese nur eine Verbesserung der Sprachverständlichkeit, nicht aber eine Verbesserung der Unterdrückung von Umgebungslärm.

Nicht jeder Ort, an dem Telephongespräche geführt werden, ist frei von Umgebungslärm. Als akustisch wirksamste Maßnahme zum Ausblenden von Störgeräuschen am Ort der Schallaufnahme erweist sich die Verwendung eines Richtmikrophones mit cardioidförmiger oder vorzugsweise auch hypercardioidförmiger Richtcharakteristik. Bei entsprechend kurzem Schallumweg des Druckgradientenwandlers kann der bei nahem Besprechungsabstand zum Mund in Erscheinung tretende Naheffekt, der eine Empfindlichkeitszunahme im Frequenzbereich bis zu 1000 Hz bewirkt, noch zusätzlich zur Minderung der auf das Mikrophon einwirkenden Störgeräusche genützt werden.

Ansätze zur Verwendung eines Richtmikrophones im Handapparat wurden wiederholt vorgenommen, wobei zumeist eine bereits mit einer vollständigen einseitigen Richtwirkung versehene Druckgradienten-Sprechkapsel in den Handapparat an Stelle der sonst üblichen Sprechkapsel mit kugelförmiger Richtcharakteristik trat. Solche Ausführungsarten sind bekannt aus der AT-PS 247 930; DE-OS 39 07 895, US-PS 4,288.652 und US-PS 4,584.702. Wegen der teilweise komplizierten Ausführung der Sprechkapsel selbst oder aber auch wegen der erschwerten Einbauweise in den Handapparat, an dem aufwendige Umgestaltungen erforderlich wurden, haben sich die in diesen Patenten beschriebenen Sprechkapseln für den praktischen Gebrauch nicht durchgesetzt.

Ein anderer Vorschlag zur Ausgestaltung eines Telephonhandapparates mit einem Richtmikrophon ist in der US-PS 4,773.091 beschrieben, der in der Anwendung eines äußerst kleinen Elektretmikrophons mit geräuschunterdrückender Wirkung besteht. Damit dieses Elektret-Richtmikrophon nach dem Einbau in den Handapparat seine Richtwirkung nicht verliert, müssen in der Gehäuseschale an der den üblichen Einspracheöffnungen gegenüberliegenden Gehäusewand weitere, schalldurchlässige Öffnungen vorgesehen sein. Zur Aufnahme des Elektretwandlers in das Gehäuse sind Adaptierungsmaßnahmen erforderlich, weil seine Baugröße wesentlich kleiner ist als die einer gebräuchlichen Sprechkapsel. Die akustische Richtwirkung der fertigen Gesamtanordnung ist jedoch äußerst schlecht, weil keine weiteren Vorkehrungen getroffen sind, die eine akustische Verkopplung der Sprechkapsel mit dem durch die Gehäuseschale gebildeten Volumen verhindern. Auch erfüllt ein solchermaßen ausgeführter Handapparat nur äußerst bedingt und mit großen Einschränkungen behaftet die von den Fernmeldebehörden verlangten Anforderungen bezüglich Frequenzgang und leitungsbezogener Empfindlichkeit. Ein elektrischer Widerstand und ein Filter sind zusätzlich erforderlich zur Anpassung an die in Fernmeldeanlagen gebräuchlichen Übertragungswerte.

Die vorliegende Erfindung will auf einfachste Weise die bisher bei der Ausgestaltung von Handapparaten mit Richtmikrophonen aufgetretenen Mängel vermeiden und hat sich die Aufgabe gestellt, einen Tauchspulenwandler in den von den Fernmeldebehörden geforderten, üblichen Abmaßen zu halten und ihn zusammen mit dem Handapparat zu einem integrierenden Bestandteil eines Richtmikrophones zu machen.

Gemäß der Erfindung wird die Aufgabe dadurch gelöst, daß der elektrodynamische Tauchspulenwandler ein Schallempfänger mit vorwiegend achterförmiger Richtcharakteristik ist, und daß das mit ihm verbundene akustische Phasendrehglied zum Erzeugen der cardioid- oder hypercardioidförmigen Richtcharakteristik Bestandteil einer oder beider Gehäuseschalen des Handapparates ist, wobei das akustische Phasendrehglied in an sich bekannter Weise die dazu erforderlichen akustischen Elemente wie akustische Massen, Federungen und Reibungen enthält, und ein mit akustischer Masse behafteter Kanal beliebig gestalteten Querschnittes, der auch ein Röhrchen sein kann, mit einer seiner beiden Öffnungen ins freie Schallfeld führt, und diese eine Öffnung das Gehäuse des Handapparates im Abstand zur Einsprechöffnung durchsetzt.

Die Erfindung weist mehrere Vorteile auf. Zum einen können die äußeren Abmaße des dynamischen Tauchspulenwandlers beliebig gewählt werden, wodurch eine Anpassung an die jeweils vorgegebene Gehäuseform des Handapparates leicht möglich ist. Zum anderen kann der im Handapparat reichlich vorhandene Hohlraum für akustische Zwecke genützt werden, um die für ein Richtmikrophon optimalsten akustischen Eigenschaften zu erreichen. Solche Eigenschaften eines Richtmikrophones sind hohe Richtwirkung bei wahlweise cardioid- oder hypercardioidförmiger Richtcharakteristik mit Bündelungsgraden von nahezu 3 für die Cardioide und nahezu 4 für die Hypercardioide, als auch die wahlweise ausnutzbare starke oder minder starke Wirkung des Nahbesprechungseffektes. Darüber hinaus ist auch die freie Wahl der Hauptbesprechungsachse des Mikrophons entsprechend seiner Ausrichtung zum Mund möglich. Die im Abstand zur Einsprechöffnung das Gehäuse des Handapparates durchsetzende, ins freie Schallfeld führende Öffnung des akustischen Phasendrehgliedes kann an beliebiger Stelle angeordnet sein, wodurch die Richtcharakteristik in Bezug auf die Sprechrichtung und die Wirkung des Nahbesprechungseffektes frei wählbar werden. Vorzugsweise wird man jedoch die Anordnung so treffen, daß die Symmetrieachse der Richtcharakteristik zum Mund hin weist.

Von besonderem Vorteil ist aber die räumliche Aufteilung zwischen eigentlichem Schallwandler und akustischem Phasendrehglied. Dadurch läßt sich der Schallwandler, der als elektrodynamischer Tauchspulenwandler ausgeführt ist, auf einfachste und billigste Weise herstellen, vorzugsweise nach dem heutigen Stand der Technologie als vollautomatisch erzeugtes Produkt. Das akustische Phasendrehglied, bestehend aus netzwerkartig zusammengesetzten akustischen Massen, Federungen und Reibungen, kann wiederum, nachdem seine Wirkungsweise mit Erfolg erprobt wurde, innerhalb der Gehäuseschale angeordnet werden, wobei ebenfalls im spritzgußtechnischen Herstellungsverfahren alle wesentlichen Elemente des akustischen Phasendrehgliedes im Spritzgußwerkzeug bereits mitberücksichtigt sind. Dichtende Maßnahmen an der Trennstelle zwischen Schallwandler und Handapparatgehäuse durch Kleben oder Schweißen auf Ultraschallbasis sind nach dem heutigen Stand der Technik problemlos ausführbar. Für eine solche integrierende Anordnung von Schallwandler und im Gehäuse des Handapparates bereits vollständig vorhandenem akustischen Phasendrehglied erweist es sich als besonders nützlich, den Schallwandler selbst zu konzipieren, daß seine ihm eigene Richtwirkung von vorwiegend achterförmiger Charakteristik ist.

Eine vorteilhafte Ausgestaltung der Erfindung besteht nun darin, daß das zum Erzeugen der cardioidförmigen oder hypercardioidförmigen Richtcharakteristik erforderliche Phasendrehglied ausschließlich in der Unterschale des zweiteiligen Handapparates angeordnet ist, wobei ein Deckel, der als Formteil ausgebildet ist, die akustische Trennung zur Oberschale bewirkt.

Soweit der in der Unterschale des Handapparates vorhandene Raum ausreichend für das Unterbringen des akustischen Phasendrehgliedes Platz bietet, wird man auf dem zusätzlich in der Oberschale vorhandenen Raum nicht angewiesen sein. Dadurch läßt sich die konstruktive Ausgestaltung des akustischen Phasendrehgliedes auf nur einen Spritzgußteil sehr wesentlich vereinfachen. Da das akustische Phasendrehglied ein Netzwerk aus Kammern, die Volumina darstellen, Kanälen, die akustische Massen darstellen, und aus an entsprechenden Stellen angeordneten akustischen Reibungen ist, wird man fehlende Begrenzungen, die nicht in der Unterschale unterzubringen sind, in einem deckelförmigen Formteil anbringen, der die Unterschale fluchtend abschließt. Dieser Formteil ist selbstverständlich ebenfalls ein Spritzgußteil aus Kunststoff. Entsprechend akustisch dicht mit der Unterschale verbunden, beispielsweise durch Ultraschallschweißung oder Klebung, nimmt er die akustische Trennung zur Oberschale vor.

Erfindungsgemäß besteht eine weitere sehr vorteilhafte Ausgestaltung des als Richtmikrophon ausgebildeten Telephonhandapparates darin, daß die ins freie Schallfeld führende Öffnung des mit akustischer Masse behafteten Kanals, bzw. Röhrchens, im Bereich der die Kabeleinführung enthaltenden Begrenzungsebene des Handapparates angeordnet ist, vorzugsweise unmittelbar neben der Kabelzuführung.

Diese Ausführungsart ist deshalb sehr sinnvoll und auch nützlich, weil durch sie vermieden wird, daß die den Handapparat beim Telephonieren haltende Hand, die ins freie Schallfeld führende Öffnung abdeckt, und damit die dem Druckgradientenempfänger eigenen Charakteristika wie Richtwirkung und Nahbesprechungseffekt zerstört. Die mit dem freien Schallfeld verbundene Öffnung wird man vorteilhafter Weise, soweit es die Konstruktion des Handapparates zuläßt, überhaupt in der für die Kabeklzuführung vorhandenen Ausnehmung unterbringen, anderenfalls aber zumindest unmittelbar neben der Kabelzuführung anordnen. Dies kann oberhalb, unterhalb oder rechts bzw. links daneben erfolgen. In besonderen Anwendungsfällen kann es sich als notwendig erweisen, die ins freie führende Öffnung doppelt anzuordnen, was bedeutet, daß jeweils links und rechts neben der Kabelzuführung eine Verbindung zum freien Schallfeld entsteht.

Im folgenden wird die Erfindung an Hand von Zeichnungen dargestellt und zusätzlich erläutert. Es zeigt Fig. 1 den Erfindungsgedanken vom Prinzip her, während die Fig. 2 bis 5 Ausführungsformen der Erfindung darstellen. Fig. 6 ist ein Ersatzschaltbild zur vorliegenden Erfindung.

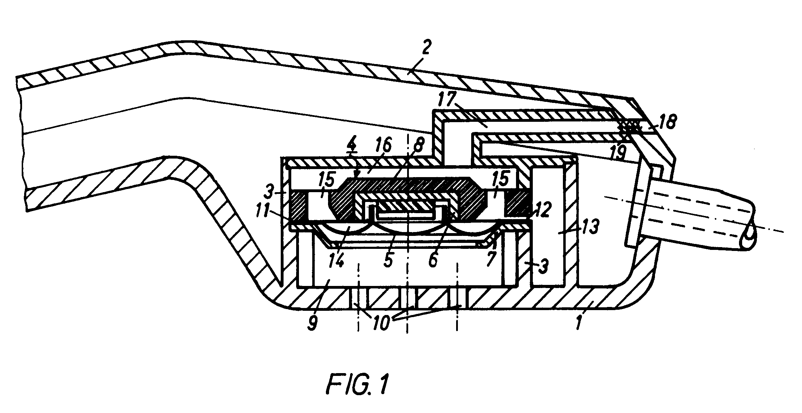

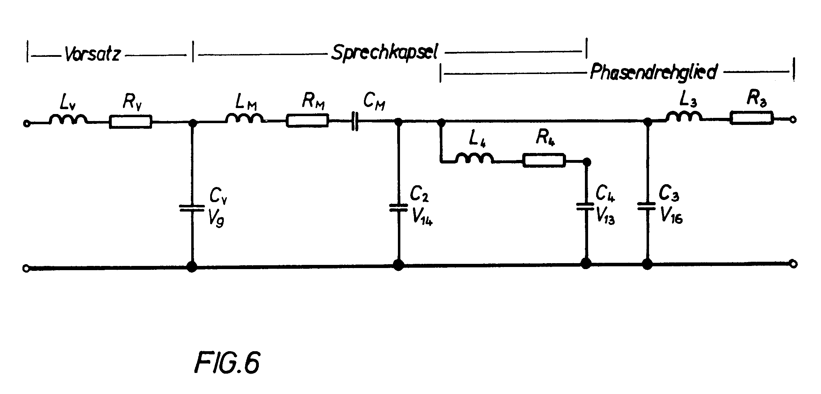

Wie Fig. 1 zeigt, befindet sich in dem aus Unterschale 1 und Oberschale 2 bestehenden Handapparat an entsprechender Stelle die Kammer 3 zur Aufnahme der Sprechkapsel 4, bestehend aus Membran 5, Ringspaltmagnetsystem 6, Schutzkreuz 7 und den im Spritzgußverfahren hergestellten Kapselkörper 8. Vor der Sprechkapsel 4, die als elektrodynamischer Tauchspulenwandler ausgebildet ist, befindet sich zur Anhebung des Frequenzganges im Frequenzbereich zwischen 2 kHz und 3kHz ein akustischer Vorsatz, der aus der Kammer 9 und den Einsprechöffnungen 10 besteht. Unterhalb des Membranrandes 11 führen mehrere radial angeordnete enge Schlitze 12 in das Volumen 13. Aus dem schmalen Kopplungsraum 14 hinter der Membran 5 führen große Öffnungen 15 ins Volumen 16, an das der Kanal bzw. das Rohr 17 anschließt, der mit seiner einen Öffnung 18 nach außen führt. Nahe dieser Austrittsöffnung 18 ist ein akustischer Reibungswiderstand 19 angeordnet, der gleichzeitig ein Eindringen von Staub und anderen Partikeln verhindert. Dieser Reibungswiderstand kann auch in Gestalt einer Engstelle des Kanals 17 als sogenannte Schlitzreibung ausgeführt sein. Die als elektrodynamischer Tauchspulenwandler ausgebildete Sprechkapsel 4 ist ein Schallempfänger mit vorwiegend achterförmiger Richtcharakteristik. Dies läßt sich daraus ersehen, daß aus dem schmalen Kopplungsraum 14 hinter der Membran 5 große Öffnungen 15, die akustisch gesehen eine zu vernachlässigende Reibung und Masse enthalten, in die äußere Umgebung des Wandlers führen. Im freien Schallfeld erzeugt daher eine parallel zur Membranebene auf den Wandler einfallende ebene Schallwelle an dieser keine Bewegungskraft, dagegen bewirkt eine senkrecht von vorne oder von hinten einfallende Welle einen maximalen Membranausschlag und damit ein maximales Signal am elektrischen Ausgang des Wandlers. Damit der soeben beschriebene elektrodynamische Tauchspulenwandler zum Richtmikrophon mit cardioid- oder hypercardioidförmiger Richtcharakteristik wird, bedarf es eines akustischen Phasendrehgliedes, welches dafür Sorge trägt, daß an der Membran 5 der Sprechkapsel eine richtungsabhängige Kraft wirksam wird. Eine solche entsteht an der Membran 5 dadurch, daß der Schalldruck des Schallfeldes sowohl unmittelbar an der Vorderseite der Membran 5 als auch phasenverschoben an der Rückseite derselben Membran als Differenzschalldruck wirksam ist. Dieses zum Erzielen der genannten Richtwirkung erforderliche akustische Phasendrehglied, das aus der Kombination eines LR- und RC-Gliedes besteht, befindet sich erfindungsgemäß in den beiden Halbschalen 1 und 2 des Handapparates, und wird aus dem mit akustischer Masse und Reibung behafteten Kanal (Röhrchen) 17, den als akustische Federung wirkenden Volumina 13 und 16 und den als akustische Reibung unterhalb des Membranrandes wirkenden Schlitzen 12 gebildet. Das dieser geometrischen Anordnung und akustischen Wirkung entsprechende elektrische Ersatzschaltbild zeigt Fig. 6. In diesem Ersatzschaltbild entspricht die Induktivität L₃ und der Widerstand R₃ dem Kanal (Röhrchen) 17, der Widerstand R₄ den engen Schlitzen 12 und die Kapazität C₄ dem Volumen 13. Diese Anordnung bildet ein LR-Glied, bei dem im zu betrachtenden Frequenzbereich die Kapazität C₄ in ihrer Wirkung zu vernachlässigen ist. Der Widerstand R₃ im Kanal (Röhrchen) 17 zusammen mit der Kapazität C₃, gebildet durch das Volumen 16, stellen ein RC-Glied dar. Bei richtiger Dimensionierung dieser Kombination ergibt sich im erforderlichen Frequenzbereich ein äußerst wirksames im Phasenverlauf linear mit der Frequenz zunehmendes Phasendrehnetzwerk, das für eine nahezu frequenzunabhängige Richtwirkung bei optimalem Frequenzgang sorgt. Für eine eingehendere und präzisere Betrachtung müßte im elektrischen Ersatzschaltbild an Stelle der Induktivität L₃ und des Widerstandes R₃ ein den Kanal bzw. das Röhrchen tatsächlich in Analogie darstellender Leitungsvierpol treten. Im zu betrachtenden Frequenzbereich von etwa 200 Hz bis etwa 3,5 kHz darf jedoch in erster und guter Annäherung das in Fig. 6 gezeigte Ersatzschaltbild treten.

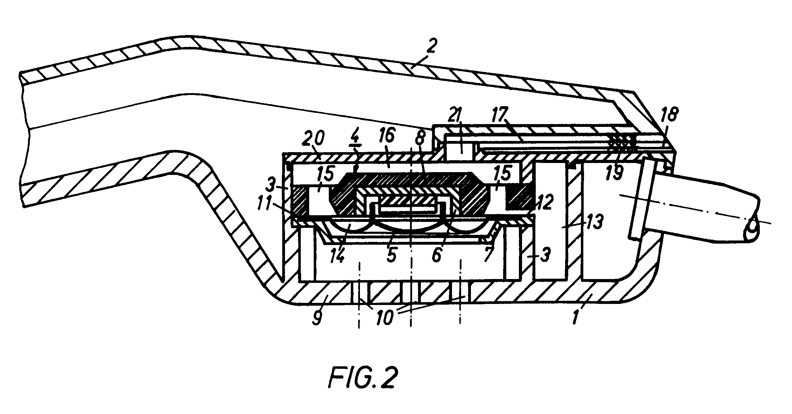

Eine erfindungsgemäße mögliche Ausführungsform ist in Fig. 2 dargestellt, die das akustische Phasendrehglied auf die Unterschale 1 und Oberschale 2 des Handapparaes aufgeteilt enthält. Die Bezugszeichen 1 bis 19 betreffen die gleichen Teile wie die in Fig. 1. Neu dagegen ist, daß aus konstruktiven und herstellungstechnischen Gründen ein Deckel 20 mit einem Rohr- bzw. Kanalstutzen 21 zum Abschließen der die Volumina 13 und 16 bildenden Kammern verwendet wird, und daß der die akustische Masse enthaltende Kanal (Röhrchen) 17 in der Oberschale 2 als mitgespritzter Kunststoffteil enthalten ist. Die Öffnung 18 stellt die Verbindung zum freien Schallfeld her. Diese Ausführungsart ist, da werkzeuggebunden, einfach und wirtschaftlich, weil lediglich der Deckel 20 als zusätzlicher, aber billiger Teil herzustellen ist.

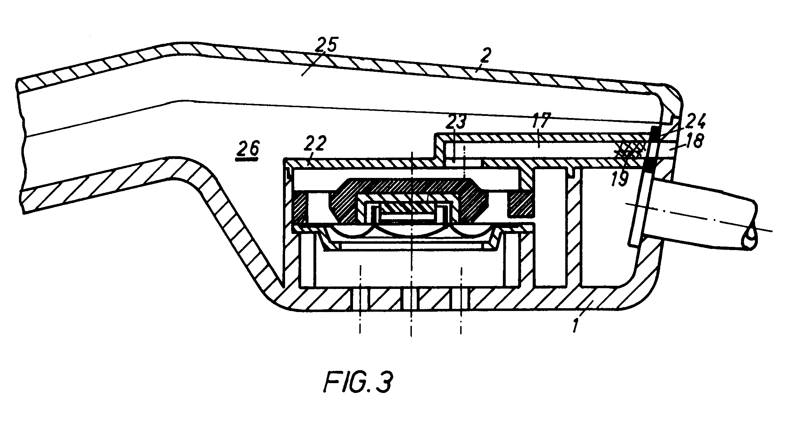

In einer weiteren Ausgestaltung der Erfindung ist das akustische Phasendrehglied ausschließlich in der Unterschale 1 des zweiteiligen Handapparates angeordnet. Diese Ausführungsart zeigt Fig. 3. Auch hier betreffen die Bezugszeichen 1 bis 19 gleiche Teile wie in Fig. 1. Abweichend ist die Ausführung des Deckels 22, der den Kanal (Röhrchen) 17 mit einer Durchtrittsöffnung zum Volumen 16 als einstückiger Kunststoff-Spritzgußteil enthält. Ein Dichtungsring 24 sorgt dafür, daß die Austrittsöffnung 18 mit dem äußeren, freien Schallfeld akustisch verbunden bleibt und keine Verkopplung mit dem von den Gehäuseschalen begrenzten Gehäusevolumen 25 entsteht, was zu einer sehr wesentlichen Beeinträchtigung der Mikrophon-Richtwirkung führen würd. Diese Ausführungsform bietet sich dann stets an, wenn die Wanne 26 der Unterschale sehr tief ausgeformt ist und die Oberschale dazu entsprechend flach verläuft.

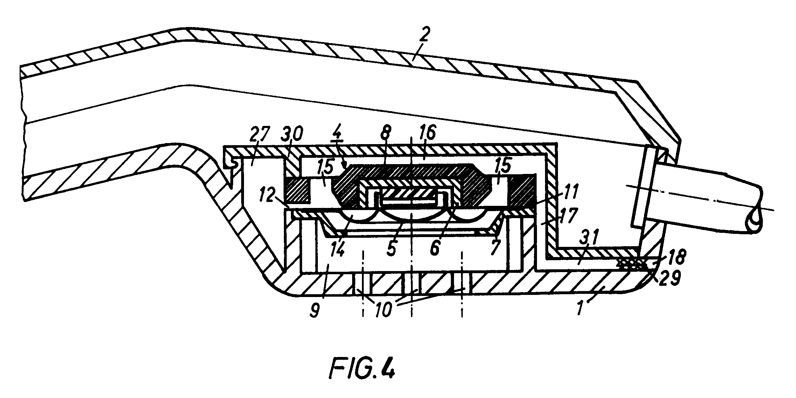

Eine in Fig. 4 gezeigte Ausführungsform kann dann erforderlich sein, wenn die Möglichkeit gegeben ist, daß die den Handapparat haltende Hand die nahe Umgebung der Kabelzuführung so stark abdeckt, daß die akustischen Eigenschaften des Richtmikrophones dadurch gestört sind. In einem solchen Fall ist es günstiger, die ins freie führende Öffnung 18 des mit akustischer Masse behafteten Kanals (Röhrchen) 31 an den Boden der Unterschale 1 des Handapparates zu verlegen. Eine entsprechende Ausführung des Deckels 30, die den Kanal (Röhrchen) 31 angeformt hat, läßt eine solche Ausführung ohne bedeutende Schwierigkeiten bei der konstruktiven Ausgestaltung zu. Die engen Schlitze 12 unterhalb des Membranrandes 11 führen in ein für diese Ausführungsform geschaffenes Volumen 27. Ebenso bedarf es einer geringfügigen Umgestaltung der die Sprechkapsel 4 aufnehmenden Kammer 3. Nahe der Öffnung 18 ist ein dem akustischen Netzwerk genügender akustischer Reibungswiderstand 29 untergebracht.

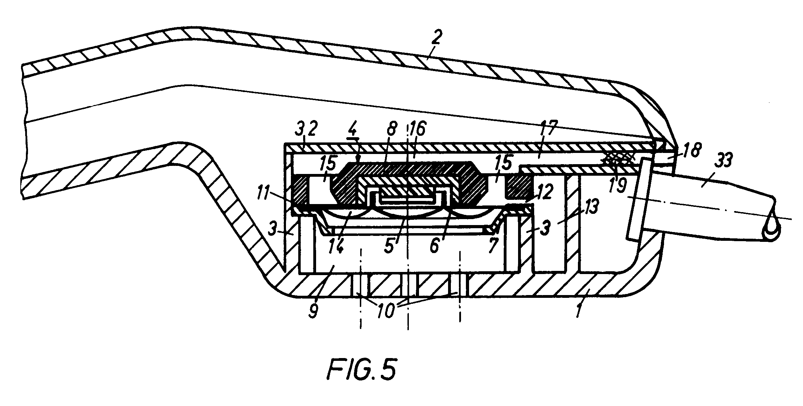

Eine weitere Ausführungsform, bei der die ins freie Schallfeld führende Öffnung 18 im Bereich nahe der Kabeleinführung 33 angeordnet ist, stellt Fig. 5 dar. Ein dafür entsprechend ausgeformter Deckel 32 ist einstückig mit dem Kanal (Röhrchen) 17 versehen. Ansonsten entspricht die Ausführung dem bereits in den Fig. 1 und 2 beschriebenen Handapparat.

Schließlich soll durch das in Fig. 6 dargestellte Ersatzschaltbild für den gesamten als Richtmikrophon ausgestalteten Telephonhandapparat in analoger Weise der Zusammenhang zwischen der konstruktiven Ausgestaltung der Erfindung und deren akustischen Wirkungsweise gezeigt werden. Die Induktivität L_{V}, der Widerstand R_{V} und die Kapazität C_{V} entsprechen der Vorsatzkammer 9 zusammen mit der in den Einsprechöffnnungen 10 enthaltenen akustischen Masse, wobei ein wahlweise auf die Öffnungen 10 gebrachtes in den Figuren nicht dargestelltes Plättchen aus Textil die akustische Reibung bildet. Die aus der Membran 5, dem Ringspaltmagnetsystem 6 und dem Schutzkreuz 7 gebildete Sprechkapsel 4 entspricht im Ersatzschaltbild den elektrischen Schaltungszeichen L_{M}, C_{M}, R_{M} für die Membran 5, C₂ für den Kopplungsraum 14 hinter der Membran, der das Volumen V₁₄ einschließt, und L₄, R₄ für die engen Schlitze 12 unterhalb des Membranrandes 11. Die großen Öffnungen 15 im Boden der Sprechkapsel 4 sind im zu betrachtenden Frequenzbereich akustisch unwirksam und daher vernachlässigbar, sodaß diese im Ersatzschaltbild keine Berücksichtigung finden. Die Sprechkapsel 4 für sich allein in ein ebenes Schallfeld eingebracht, würde einem Wandler mit achterförmiger Richtcharakteristika entsprechen. Damit jedoch ein voll wirksames Richtmikrophon mit cardioid- oder hypercardioidförmiger Richtcharakteristik entsteht, bedarf es zusätzlich zu der bereits vorhandenen Sprechkapsel 4 eines Phasendrehgliedes, das durch die Volumina 13 und 16, durch den mit akustischer Masse behafteten Kanal 17 und der akustischen Reibung 19 im Zusammenwirken mit den engen Schlitzen 12 gebildet wird. Im Ersatzschaltbild sind diese akustischen Elemente durch die Schaltungszeichen C₄, C₃, L₃, R₃ und R₄ dargestellt. Eine ganz exakte elektrische Nachbildung des Kanals (Röhrchen) 17 für Frequenzen oberhalb von etwa 3 kHz würde an Stelle der Induktivität L₃ und des Widerstandes R₃ einen Leitungsvierpol verlangen.

## Patentansprüche

1. Als Richtmikrophon mit cardioidförmiger oder hypercardioidförmiger Richtcharakteristik ausgebildeter Telephonhandapparat, bei dem das Richtmikrophon aus einem elektrodynamischen Tauchspulenwandler (4) und einem mit diesem verbundenen akustischen Phasendrehglied besteht, wobei der Tauchspulenwandler in einem zweischalig ausgebildeten Handapparat (1, 2) untergebracht ist, dadurch gekennzeichnet, daß der elektrodynamische Tauchspulenwandler (4) ein Schallempfänger mit vorwiegend achterförmiger Richtcharakteristik ist, und daß das mit ihm verbundene akustische Phasendrehglied zum Erzeugen der cardioid- oder hypercardioidförmigen Richtcharakteristik Bestandteil einer oder beider Gehäuseschalen (1, 2) des Handapparates ist, wobei das akustische Phasendrehglied in an sich bekannter Weise die dazu erforderlichen akustischen Elemente wie akustische Massen (12, 17, L₃, L₄), Federungen (13, 16, C₃, C₄) und Reibungen (12, 19, R₃, R₄) enthält und ein mit akustischer Masse behafteter Kanal (17) beliebig gestalteten Querschnittes, der auch ein Röhrchen sein kann, mit einer seiner beiden Öffnungen ins freie Schallfeld führt, und diese eine Öffnung (18) das Gehäuse des Handapparates im Abstand zur Einsprechöffnung (10) durchsetzt.

2. Als Richtmikrophon ausgebildeter Telephonhandapparat nach Anspruch 1, dadurch gekennzeichnet, daß das zum Erzeugen der cardioidförmigen oder hypercardioidförmigen Richtcharakteristik erforderliche Phasendrehglied ausschließlich in der Unterschale (1) des zweiteiligen Handapparates angeordnet ist, wobei ein Deckel (22, 30, 32), der als Formteil ausgebildet ist, die akustische Trennung zur Oberschale bewirkt.

3. Als Richtmikrophon ausgebildeter Telephonhandapparat nach Anspruch 1, dadurch gekennzeichnet, daß die ins freie Schallfeld führende Öffnung (18) des mit akustischer Masse behafteten Kanals (17) bzw. Röhrchens, im Bereich der die Kabeleinführung (33) enthaltenden Begrenzungsebene des Handapparates angeordnet ist, vorzugsweise unmittelbar neben der Kabelzuführung.

## Claims

1. A telephone handset, constructed as a directional microphone having a cardioid or hypercardioid directional characteristic, the directional microphone consisting of an electrodynamic moving-coil transducer (4) and an acoustic phase shifter connected thereto, the moving-coil transducer being accommodated in a handset (1, 2) made in two halves, characterised in that the electrodynamic moving-coil transducer (4) is a sound pick-up having a predominantly figure-of-eight directional characteristic, and in that the acoustic phase shifter connected thereto for the purpose of producing the cardioid or hypercardioid directional characteristic is part of one or both halves (1, 2) of the handset housing, the acoustic phase shifter containing in manner known per se the acoustic elements required for the purpose, such as acoustic masses (12, 17, L₃, L₄), suspension means (13, 16, C₃, C₄) and friction means (12, 19, R₃, R₄) and a channel (17) of any desired cross-section, which has an acoustic mass and which may also be a small tube leading by one of its two openings into the free sound field, and said one opening (18) extends through the handset housing at a distance from the speak opening (10).

2. A telephone handset constructed as a directional microphone according to claim 1, characterised in that the phase shifter required to produce the cardioid or hypercardioid directional characteristic is disposed solely in the bottom half (1) of the two-part handset, a cover (22, 30, 32) constructed as a moulding providing acoustic separation from the top half.

3. A telephone handset constructed as a directional microphone according to claim 1, characterised in that that opening (18) of the channel (17) having the acoustic mass or of the tube, which leads into the free sound field, is disposed in the region of the handset boundary plane containing the cable lead-in (33), preferably immediately beside the cable supply.

## Revendications

1. Combiné téléphonique muni d'un microphone directif ayant un diagramme directionnel en forme de cardioïde ou d'hypercardioïde, le microphone directif étant composé d'un transducteur électrodynamique à bobine mobile (4) et d'un organe de rotation de phase acoustique relié à ce transducteur, lequel est logé dans un corps de combiné formé de deux coquilles (1, 2), caractérisé en ce que le transducteur à bobine mobile (4) est un récepteur de son ayant un diagramme directionnel qui est de façon prédominante de forme en huit, et que l'organe de rotation de phase acoustique, relié au transducteur, fait partie, en vue de la génération du diagramme directionnel en cardioïde ou hypercardioïde, de l'une ou des deux coquilles (1, 2) formant le corps du combiné, l'organe de rotation de phase acoustique contenant, de façon en elle-même connue, les éléments acoustiques nécessaires dans ce but, tels que des masses acoustiques (12, 17, L₃, L₄), des dispositifs à élasticité acoustique (13, 16, C₃, C₄) et des dispositifs à friction (12, 19, R₃, R₄), et un canal (17) affecté d'une masse acoustique et pouvant avoir une section droite de toute conformation désirée, canal qui peut également être formé par un petit tube, débouche dans le champ sonore libre par l'un (18) de ses deux orifices, lequel traverse le corps du combiné à distance de l'ouverture d'entrée de la parole (10).

2. Combine téléphonique muni d'un microphone directif selon la revendication 1, caractérisé en ce que l'organe de rotation de phase, nécessaire pour produire le diagramme directionnel en cardioïde ou hypercardioïde, est disposé exclusivement dans la coquille inférieure (1) du corps de combiné en deux parties, avec prévision d'un couvercle (22, 30, 32), constitué par une pièce moulée, pour assurer la séparation acoustique par rapport à la coquille supérieure.

3. Combiné téléphonique muni d'un microphone directif selon la revendication 1, caractérisé en ce que l'orifice (18) du canal (17) ou du petit tube affecté d'une masse acoustique, orifice qui débouche dans le champ sonore libre, est placé dans la zone du plan de délimitation du combiné contenant l'entrée du cordon (33), de préférence directement à côté de l'arrivée du cordon.
